# EUROPÄISCHE PATENTANMELDUNG

(11) **EP 1 479 704 A2**
(43) Veröffentlichungstag der Anmeldung: **24.11.2004**
(21) Anmeldenummer: 04010886.2
(22) Anmeldetag: 07.05.2004
(51) Int. Cl.: C08G 18/40, C08G 18/62, C09D 175/04

(54) **Festkörperreiche Bindemittelkombinationen für kratzfeste Decklacke**

(30) Priorität: 20.05.2003 DE 10322620
(71) Anmelder: Bayer MaterialScience AG, 51368 Leverkusen (DE)
(72) Erfinder: Wamprecht, Christian, Dr., 41472 Neuss (DE); Mechtel, Markus, Dr., 51467 Bergisch Gladbach (DE); Tillack, Jörg, Dr., 51427 Bergisch Gladbach (DE); Klimmasch, Thomas, 51379 Leverkusen (DE)

(57) **Zusammenfassung**

Die vorliegende Erfindung betrifft neue, festkörperreiche Bindemittelkombinationen aus Polyisocyanaten, speziellen Lacton-basierenden Polyolen und Polyacrylatpolyolen, ein Verfahren zu ihrer Herstellung und deren Verwendung zur Herstellung von Überzügen.

## Beschreibung

Die vorliegende Erfindung betrifft neue, festkörperreiche Bindemittelkombinationen aus Polyisocyanaten, speziellen Lacton-basierenden Polyolen und Polyacrylatpolyolen, ein Verfahren zu ihrer Herstellung und deren Verwendung zur Herstellung von Überzügen.

Festkörperreiche Lackformulierungen sind aufgrund ihrer geringen Anteile an flüchtigen organischen Lösemitteln von großem Interesse. Kernproblem dabei ist jedoch die Bereitstellung von Polyolen, die eine möglichst niedrige Viskosität aufweisen, aber gleichzeitig der ausgehärteten Beschichtung die notwendigen mechanischen Eigenschaften, wie Kratzfestigkeit oder Härte und Beständigkeitseigenschaften, wie Lösemittel- und Chemikalienbeständigkeit, verleihen.

Lacke auf Basis von Polyacrylatpolyole zeichnen sich gegenüber Polyesterpolyolen besonders durch ein schnelle physikalische Trocknung, gute Lösemittel- und Chemikalienbeständigkeit sowie Bewitterungsstabilität aus. Problematisch jedoch ist ihre im Vergleich hohe Viskosität. Polyacrylatpolyole mit geringerer Viskosität, wie sie für festkörperreiche Beschichtungsmittel notwendig sind, sind aufgrund ihres niedrigen Molgewichts nachteilig, weil die Eigenschaften der daraus hergestellten Beschichtungen insbesondere in Hinblick auf gleichzeitige Kratzfestigkeit, Säurebeständigkeit und Oberflächenhärte deutlich schlechter als die herkömmlicher stärker Lösemittel-haltiger Polyacrylatpolyole sind.

Die DE-A 198 24 118 beschreibt lösemittelarme Bindemittel auf Polyester-Acrylatbasis, die mit Di- und/oder Polyisocyanaten zu schnell trocknenden Beschichtungen mit guter Haftung ausgehärtet werden können. Aufgrund des hohen Polyesteranteils jedoch weisen diese nur eine unzureichende Säurebeständigkeit auf und sind für den Einsatz in Automobildecklacken ungeeignet.

Die WO 96/20968 beschreibt ein Beschichtungsmittel für Automobile und Lastkraftwagen, das ein Polyacrylat auf Basis von alkylsubstituierten cycloaliphatischen (Meth)acrylatmonomeren oder alkylsubstituierten aromatischen Vinylmonomeren, einen multihydroxyfunktionellen Oligoester und ein Polyisocyanat enthält. Da die Oligoester allerdings herstellbedingt neben primären auch eine größere Anzahl an sekundären Hydroxylgruppen aufweisen und für niedrigviskose Beschichtungsmittel (< 3000 mPa·s / 23°C) sehr hohe Mengen dieser Ester (> 60 Gew.-% bezogen auf die Gesamtformulierung) eingesetzt werden müssen, härten diese nur sehr langsam und bei höheren Temperaturen aus, so dass sie für temperaturempfindliche Substrate ungeeignet sind.

EP-A 0 896 991 beschreibt Beschichtungsmittel auf Basis von Polyacrylat-Polyester-Mischungen mit Polyesteranteilen ≤ 10 Gew.-% und Hydroxylzahlen von 40 - 125 mg KOH/g. Aufgrund der resultierenden niedrigen Vernetzungsdichte weisen daraus hergestellte PUR-Lacke keine ausreichenden Lösemittel- und Chemikalienbeständigkeit auf. Darüber hinaus ist die Viskosität mit 3000 - 5000 mPas / 23°C bei einem Festkörpergehalt von 70 Gew.-% für die Formulierung festkörperreicher PUR-Lacke zu hoch.

Der vorliegenden Erfindung lag daher die Aufgabe zugrunde, neue Bindemittelkombinationen bereitzustellen, die die bekannten Vorteile solcher auf Basis von hochmolekularen Polyacrylatpolyole aufweisen und dabei gleichzeitig aber so niedrigviskos sind, dass sie zur Herstellung lösemittelarmer Beschichtungsmittel geeignet sind.

Es wurde nun gefunden, dass Kombinationen aus niedrigviskosen Polyolkomponenten auf Basis von speziellen festkörperreichen Copolymerisaten und speziellen Lacton-basierenden Polyesterpolyolen und Vernetzungsmittel zu Beschichtungen mit schneller physikalische Trocknung und rascher chemische Vernetzung führen, die sich durch eine ausgezeichnete Lösemittel- und Chemikalienbeständigkeit sowie sehr hohe Kratzfestigkeit auszeichnen.

Gegenstand der Erfindung sind daher Bindemittelzusammensetzungen enthaltend
A) ein oder mehrere hydroxyfunktionelle Polyacrylatharze,
B) ein oder mehrere ε-Caprolacton-basierende Polyole mit einer mittleren Hydroxyfunktionalität ≥ 2 und einem zahlenmittleren Molekulargewicht von 119 bis 2.000 g/mol,
C) ein oder mehrere gegenüber OH-Gruppen reaktive Vernetzer einer mittleren Funktionalität > 1 und
D) optional Lösemittel, Hilfs- und Zusatzstoffe,
dadurch gekennzeichnet, dass die Polyacrylatharze der Komponente A) durch Copolymerisation hergestellt werden aus:
a) 0 - 10 Gew.-Teilen eines oder mehrerer, gegebenenfalls funktioneller, Polybutadiene mit einem zahlenmittleren Molekulargewicht von 500 bis 10.000 g/mol und mit einem Anteil an 1,2-seitenständigen vinylischen Doppelbindungen von mindestens 10 Mol.-% bezogen auf alle enthaltenen vinylischen Doppelbindungen des Polybutadiens,
b) 1-30 Gew.-Teilen eines oder mehrerer ungesättigter, aromatischer Monomere ausgewählt aus der Gruppe Styrol, α-Methylstyrol und Vinyltoluol,
c) 30 - 80 Gew.-Teilen eines oder mehrerer Hydroxyalkylester der Acryl- oder Methacrylsäure mit primären Hydroxylgruppen,
d) 0-30 Gew.-Teilen eines oder mehrerer cycloaliphatischer Ester aus Acryl- oder Methacrylsäure und C₃ bis C₁₂ Monoalkoholen,
e) 10 - 60 Gew.-Teilen eines oder mehrerer aliphatischer Ester aus Acryl- oder Methacrylsäure und C₁ bis C₈ Monoalkoholen,
f) 0,1 - 5 Gew.-Teilen einer oder mehrerer α,β-ungesättigter C₃ - C₇ Mono- oder Dicarbonsäuren oder eines oder mehrerer Halbester der Maleinsäure- oder Fumarsäure und C₁ bis C₁₄ Monoalkoholen und
g) 0-30 Gew.-Teilen weiterer von den Verbindungen der Komponenten a) - f) verschiedener copolymerisierbarer Verbindungen,
wobei jeweils die Summe der Gew.-Teile der Komponenten a) bis g) 100 beträgt.

Bevorzugt bestehen die Copolymerisate der Komponente A) aus:
a) 0,1 - 8 Gew.-Teilen eines oder mehrerer, gegebenenfalls funktioneller, Polybutadiene mit einem zahlenmittleren Molekulargewicht von 500 bis 5.000 g/mol und mit einem Anteil an 1,2-seitenständigen vinylischen Doppelbindungen von mindestens 20 mol.-% bezogen auf alle enthaltenen vinylischen Doppelbindungen des Polybutadiens,
b) 2 - 28 Gew.-Teilen Styrol,
c) 35 - 70 Gew.-Teilen einer oder mehrerer Verbindungen der Gruppe bestehend aus Hydroxyethylacrylat, Hydroxyethylmethacrylat und Butandiol-1,4-monoacrylat,
d) 0-25 Gew.-Teilen einer oder mehrerer cycloaliphatischer Ester aus Acryl- oder Methacrylsäure und C₃ bis C₁₂ Monoalkoholen,
e) 15-60 Gew.-Teilen einer oder mehrerer Ester aus Acryl- oder Methacrylsäure und aliphatischen C₁ bis C₈ Monoalkoholen,
f) 0,3-4 Gew.-Teilen einer oder mehrerer Verbindungen der Gruppe bestehend aus Acrylsäure, Methacrylsäure, Maleinsäurehalbestern und Fumarsäurehalbestern aus den entsprechenden Säuren und C₁ bis C₈ Monoalkoholen und
g) 0-25 Gew.-Teilen einer oder mehrerer Verbindungen der Gruppe bestehend aus Acrylnitril, Methacrylnitril, Hydroxypropyl(meth)acrylat, Vinylester aliphatischer, gegebenenfalls verzweigter C₁ bis C₁₀ Monocarbonsäuren, Dialkyl- oder Dicycloalkylester aus Malein- oder Fumarsäure und C₃ bis C₈ Monoalkoholen,
wobei die Summe der Gew.-Teile der Komponenten a) bis g ) 100 beträgt.

Besonders bevorzugt bestehen die Copolymerisate der Komponente A) aus:
a) 0,2 - 6,0 Gew.-Teilen eines oder mehrerer, gegebenenfalls funktioneller, Polybutadiene mit einem zahlenmittleren Molekulargewicht von 500 bis 3.000 g/mol und mit einem Anteil an 1,2-seitenständigen vinylischen Doppelbindungen von mindestens 30 mol.-% bezogen auf alle enthaltenen vinylischen Doppelbindungen des Polybutadiens,
b) 5 - 25 Gew.-Teilen Styrol,
c) 40 - 65 Gew.-Teilen Hydroxyethylacrylat, Hydroxyethylmethacrylat oder deren Mischungen,
d) 0-20 Gew.-Teilen einer oder mehrerer Verbindungen der Gruppe bestehend aus Isobornylacrylat, Isobornylmethacrylat, Cyclohexyl(meth)acrylat, 3,5,5-Trimethylcyclohexyl(meth)acrylat, 4-tert.-Butylcyclohexyl(meth)acrylat,
e) 20 - 50 Gew.-Teilen eines oder mehrerer Ester aus Acryl- oder Methacrylsäure und aliphatischen C₁ bis C₈ Monoalkoholen,
f) 0,5 - 3 Gew.-Teilen Acrylsäure, Methacrylsäure oder deren Mischungen,
g) 0 - 20 Gew.-Teilen einer oder mehrerer Verbindungen der Gruppe bestehend aus Acrylnitril, Methacrylnitril, Hydroxypropyl(meth)acrylat, Vinylester aliphatischer, gegebenenfalls verzweigter C₁ bis C₁₀ Monocarbonsäuren und Dialkyl- oder Dicycloalkylester aus Malein- oder Fumarsäure und C₃ bis C₈ Monoalkoholen,
wobei die Summe der Gew.-Teile der Komponenten a) bis g) 100 beträgt.

Ganz besonders bevorzugt bestehen die Copolymerisate der Komponente A) aus:
a) 0,4 - 5 Gew.-Teilen eines oder mehrerer, gegebenenfalls funktioneller, Polybutadiene mit einem zahlenmittleren Molekulargewicht von 500 bis 2.000 g/mol und mit einem Anteil an 1,2-seitenständigen vinylischen Doppelbindungen von mindestens 40 mol.-% bezogen auf alle enthaltenen vinylischen Doppelbindungen des Polybutadiens,
b) 5-20 Gew.-Teilen Styrol,
c) 40 - 60 Gew.-Teilen Hydroxyethylacrylat, Hydroxyethylmethacrylat oder deren Mischungen,
d) 0-15 Gew.-Teilen einer oder mehrerer Verbindungen der Gruppe bestehend aus Isobornylacrylat, Isobornylmethacrylat, Cyclohexyl(meth)acrylat, 3,5,5-Trimethylcyclohexyl(meth)acrylat und 4-tert.-Butylcyclohexyl(meth)acrylat,
e) 25 - 45 Gew.-Teilen eines oder mehrerer Esters aus Acryl- oder Methacrylsäure und aliphatischen C₁ bis C₄ Monoalkoholen,
f) 0,5-2 Gew.-Teilen Acrylsäure, Methacrylsäure oder deren Mischungen und
g) 0-15 Gew.-Teilen einer oder mehrerer der Verbindungen der Gruppe bestehend aus Hydroxypropyl(meth)acrylat, Vinylester aliphatischer, gegebenenfalls verzweigter C₁ bis C₉ Monocarbonsäuren, Dialkyl- oder Di(cyclo)alkylester aus Malein- oder Fumarsäure und C₃ bis C₆ Monoalkoholen,
wobei die Summe der Gew.-Teile der Komponenten a) bis g) 100 beträgt.

Die Herstellung der erfindungswesentlichen Harze der Komponente A) wird durch Copolymerisation der Bestandteile a) bis g) nach üblichen, dem Fachmann vertrauten Methoden durchgeführt [Houben-Weyl (Hrsg.): Methods of Organic Chemistry, 4 th ed., E 20/2. Thieme, Stuttgart 1987, S. 1156], wobei eine radikalische Lösungspolymerisation der Komponenten a) - g) bei Temperaturen von 140 bis 240°C in Gegenwart von Radikalbildnern bevorzugt ist.

Die Monomeren bzw. Oligomeren a) bis g) werden im allgemeinen in nahezu den gleichen Verhältnissen, wie sie zur Polymerisation eingesetzt werden, in das Copolymerisat eingebaut. Die eingebauten Einheiten sind im wesentlichen statistisch verteilt.

Als Ausgangsmaterialien a) für die erfindungswesentlichen Copolymerisate A) sind grundsätzlich alle Polybutadiene mit einem zahlenmittleren Molekulargewicht von 500 - 10.000 g/mol geeignet, die einen Anteil an vinylischen Doppelbindungen in seitenständiger 1,2-Position von mindestens 10 mol.-%, bevorzugt mindestens 20 mol.-%, besonders bevorzugt mindestens 40 mol.-%, ganz besonders bevorzugt 40-95 mol.-% bezogen auf alle in dem Polybutadien enthaltenen Vinyldoppelbindungen, besitzen.

Typischerweise werden als Verbindungen der Komponente a) Polybutadien-Isomerengemische eingesetzt, deren vinylische Doppelbindungen zu 10 bis 95 mol.-% in 1,2-Stellung sind, zu 5 bis 70 mol.-% in 1,4-cis und/oder 1,4-trans-Stellung sind und zu 0 bis 30 mol.-% in cyclischen Strukturen vorliegen.

Die eingesetzten Polybutadiene können gegebenenfalls auch funktionelle Gruppen, wie beispielsweise Hydroxylgruppen, Carboxylgruppen oder Epoxidgruppen, tragen.

Eine Übersicht geeigneter Polybutadiene der vorstehend genannten Art ist in "Makromoleküle" von H. G. Elias, 4. Auflage, Hüthig und Wepf-Verlag, Basel, Heidelberg, New York, Seiten 676 sowie 744 bis 746 und 1012 ff aufgeführt.

Die Herstellung der Copolymerisate A) kann in Gegenwart eines Lösungsmittels durchgeführt werden. Hierfür eignen sich beispielsweise aliphatische, cycloaliphatische und/oder aromatische Kohlenwasserstoffe, wie Alkylbenzole, z.B. Toluol, Xylol; Ester, wie Ethylacetat, n-Propylacetat, Isopropylacetat, n-Butylacetat, n-Hexylacetat, 2-Ethylhexylacetat, Ethylpropionat, Butylpropionat, Pentylpropionat, Ethylenglykolmonoethyletheracetat, das entsprechende Methyletheracetat; Ether wie Ethylenglykolacetatmonomethyl-, -ethyl- oder -butylether; Ketone wie Aceton, Methylethylketon, Methylisobutylketon, Methyl-n-amylketon oder Gemische derartiger Lösemittel.

Neben einem Lösungsmittel der vorstehend genannten Art kann während der Copolymerisation auch zusätzlich die Polyolkomponente B) ganz oder teilweise und/oder Lactone, wie z.B. ε-Caprolacton, zugegen sein.

Die Herstellung der Copolymerisate A) kann kontinuierlich oder diskontinuierlich erfolgen.

Bei kontinuierlicher Herstellung wird in einen Polymerisationsreaktor gleichmäßig und kontinuierlich die Monomermischung und der Initiator eindosiert und gleichzeitig die entsprechende Menge Polymerisat kontinuierlich abgeführt, so dass sehr einheitliche Copolymere erhalten werden.

Bei einer diskontinuierlichen Herstellung werden Monomermischung und Initiator in den Polymerisationsreaktor eindosiert, wobei das Polymerisat im Reaktor verbleibt. Um möglichst einheitlich aufgebaute Copolymere zu erhalten werden Monomermischung und Initiator mit konstanter Geschwindigkeit in den Reaktor eindosiert.

Unter einheitlichen Copolymeren im Sinne der Erfindung werden Copolymerisate mit enger Molekulargewichtsverteilung und einer geringen Uneinheitlichkeit von bevorzugt U ≤ 2,5 sowie nahezu gleicher Monomerzusammensetzung der Molekülketten verstanden.

Im allgemeinen erfolgt die Copolymerisation im Temperaturbereich von 140 bis 240°C, vorzugsweise 145 bis 220°C und besonders bevorzugt 150 bis 200°C.

Die Copolymerisation kann dabei unter einem Druck von bis zu 15 bar durchgeführt werden.

Die Initiatoren werden in Mengen von 0,05 bis 15 Gew.-%, vorzugsweise 1 bis 10 Gew.-%, insbesondere 2 bis 8 Gew.-%, bezogen auf die Gesamtmenge der Komponenten a) bis g), eingesetzt.

Geeignete Initiatoren zur Herstellung der Copolymerisate A) sind übliche Radikalstarter auf Azo- oder Peroxidbasis, jedoch nur solche, die in dem oben genannten Temperaturbereich eine für die Polymerisation genügend lange Halbwertszeit von ca. 5 Sekunden bis ca. 30 Minuten besitzen. Geeignet sind beispielsweise 2,2'-Azobis-(2-methylpropannitril), 2,2'-Azobis-(2-methylbutannitril), 1,1'-Azobis(cyclohexan-carbonitril), tert.-Butylperoxy-2-ethylhexanoat, tert.-Butylperoxydiethylacetat, tert.-Butylperoxyisobutyrat, 1,1-Di-tert.-butylperoxy-3,3,5-trimethylcyclohexan, 1,1-Di-tert.-butylperoxycyclohexan, tert.-Butylperoxy-3,5,5-trimethylhexanoat, tert.-Butyl-peroxyisopropylcarbonat, tert.-Butylperoxyacetat, tert.-Butylperoxybenzoat, Dicumylperoxid, tert.-Butylcumylperoxid, Di-tert.-butylperoxid und Di-tert.-amylperoxid.

Bei den Verbindungen der Komponente B) handelt sich um ε-Caprolacton basierende Polyole mit einer OH-Funktionalität von ≥ 2, vorzugsweise ≥ 2,5, besonders bevorzugt ≥ 3, ganz besonders bevorzugt 3-8, einem zahlenmittleren Molekulargewicht von 119 bis 2.500 g/mol, vorzugsweise 119 bis 2.200 g/mol, besonders bevorzugt 119 bis 2.000 g/mol und ganz besonders bevorzugt 119 bis 1.500 g/mol. Der Hydroxylgehalt der Polyole der Komponente B) liegt bei 1,0 bis 50 Gew.-%, vorzugsweise 1,3 bis 45 Gew.-%, besonders bevorzugt 1,6 bis 40 Gew.-% und ganz besonders bevorzugt 9,0 bis 36 Gew.-%.

Bei der Herstellung der Polyole der Komponente B) kommen monomere oder oligomere Polyole einer mittleren OH-Funktionalität ≥ 2, vorzugsweise ≥ 2,5, besonders bevorzugt 3-8, zum Einsatz, die mit ε-Caprolacton unter ringöffnender Reaktion umgesetzt werden. Geeignete Polyole in diesem Zusammenhang sind beispielsweise Ethylenglycol, Diethylenglycol, Propylenglycol, Butandiol-1,4 und -1,3, Neopentylglykol, Hexandiol-1,6, Cyclohexan-1,4-dimethanol, Trimethylolpropan, Trimethylolethan, Pentaerythrit, Trishydroxyethylisocyanurat, Glycerin oder Sorbit.

Die Reaktion der genannten Ausgangspolyole mit ε-Caprolacton ist dem Fachmann bekannt [A. Balas, G. Palka, J. Foks und H. Janik, J. Appl. Polym. Sci. 29 (1984) 2261] und erfolgt bei Temperaturen von 100 bis 250°C, vorzugsweise 120 bis 200°C und besonders bevorzugt 140 bis 180°C. Sie kann mittels Katalysatoren, wie z.B. zinnorganischen Verbindungen wie Dibutylzinndilaurat, beschleunigt werden.

Die entstandenen ε-Caprolacton enthaltenden Polyole können z.B. durch Umsetzung mit Diphenylcarbonat oder Dimethylcarbonat zu Carbonat- und Estergruppen aufweisenden, ε-Caprolacton enthaltenden Polyolen weiter modifiziert werden.

Die vorstehend beschriebenen ε-Caprolacton-basierenden Polyole der Komponente B) sind farblose, viskose Harze, die mit den Polyacrylaten der Komponente A) gut verträglich sind.

Der Hydroxylgruppengehalt (bezogen auf Festharz) der Bindemittelkomponenten A) und B) zusammen beträgt 4,0 bis 20,0 Gew.-%, vorzugsweise 4,5 bis 17,0 Gew.-%, besonders bevorzugt 5,0 bis 14,0 Gew.-% und ganz besonders bevorzugt 5,5 bis 12,0 Gew.-%.

Neben den Polyolen der Komponenten A) und B) können prinzipiell auch weitere aus der Polyurethanlacktechnologie bekannte, organische Polyhydroxylverbindungen und/oder aminische Reaktivverdünner oder Mischungen aus diesen Polyolen und aminischen Reaktivverdünnern eingesetzt werden. Bei diesen anderen Polyhydroxylverbindungen kann es sich um die üblichen Polyester-, Polyether-, Polycarbonat-, Polyurethan- oder Polyacrylatpolyole handeln.

Vorzugsweise werden als weitere organische Polyhydroxylverbindungen, falls solche überhaupt neben A) und B) zum Einsatz gelangen, die an sich bekannten Polyacrylatpolyole und/oder Polyesterpolyole des Standes der Technik eingesetzt. Bei den aminischen Reaktivverdünnern kann es sich um Produkte mit blockierten Aminogruppen, wie z.B. Aldimine oder Ketimine, oder um solche, die noch freie, jedoch in ihrer Reaktivität abgeschwächte Aminogruppen aufweisen, wie z.B. Asparaginsäureester, handeln. In aller Regel weisen die aminischen Reaktivverdünner mehr als eine (blockierte) Aminogruppe auf, so dass sie bei der Vernetzungsreaktion zum Aufbau des polymeren Lackfilmnetzwerkes beitragen.

Bei der erfindungsgemäßen Verwendung der erfindungswesentlichen Bindemittelkomponenten, bestehend aus A) und B), können diese in Abmischung mit bis zu 50, vorzugsweise bis zu 30 Gew.-% an anderen Polyolen und/oder aminischen Reaktivverdünnern der beispielhaft genannten Art zum Einsatz gelangen.

Besonders bevorzugt werden jedoch ausschließlich Polyole der Komponenten A) und B) eingesetzt.

In einer besonderen Ausführungsform ist es zur Herstellung der erfindungswesentlichen Polyolkomponente, bestehend aus A) und B) möglich, die Polyacrylatkomponente A) zumindestens teilweise in Gegenwart der Polyole B) herzustellen.

Als Komponente C) der erfindungsgemäßen Bindemittelzusammensetzungen kommen alle dem Fachmann bekannten Vernetzungsreagenzien in Betracht, die durch chemische Reaktionen mit Hydroxylgruppen zu einer Aushärtung führen. Dies können blockierte oder unblockierte Polyisocyanate, Epoxide, Carbonsäureanhydride, Phenolplastharze, Resolharze, Harnstoffharze, Guanidinharze, Aminoplastharze, z.B. Melamin-Derivate, wie alkoxylierte Melaminharze oder Melamin-Formaldehyd-Kondensationsprodukte (z.B. FR-B 943411, von D. H. Salomon in "The Chemistry of Organic Filmformers", Seiten 235 - 240, John Wiley & Sons, Inc., New York, 1974) oder Gemische der vorstehend genannten Vernetzungsreagenzien sein.

Als bevorzugte Vernetzer der Komponente C) kommen die an sich in der Lackchemie bekannten Urethan-, Uretdion-, Allophanat-, Biuret-, Iminooxadiazindion- und/oder Isocyanuratgruppenhaltigen Polyisocyanate in gegebenenfalls ganz oder teilweise NCO-blockierter Form in Betracht, die durch dem Fachmann bekannte Modifizierungen monomerer aliphatischer, cycloaliphatischer, araliphatischer und/oder aromatischer Diisocyanate zugänglich sind. Als Diisocyanate sind beispielhaft zu nennen 1,6-Diisocyanatohexan, 1-Isocyanato-3,3,5-trimethyl-5-isocyanatomethylcyclohexan (Isophorondiisocyanat), 4,4'-Diisocyanatodicyclohexylmethan, 1,4-Diisocyanatocyclohexan, 1-Methyl-2,4-diisocyanatocyclohexan, 1-Methyl-2,6-diisocyanatocyclohexan sowie deren Gemische. 4-Isocyanatomethyl-1,8-octandiisocyanat wird üblicherweise ohne zusätzliche Modifizierung eingesetzt.

Gegebenenfalls kann in C) auch Diisocyanatotoluol (TDI) und seine Isomeren-Gemische mit bis zu 35 Gew.-% 2,6-Diisocyanatotoluol, bezogen auf Gesamtmenge an TDI, enthalten sein.

Die Herstellung dieser Lackpolyisocyanate, ausgehend von monomeren Diisocyanaten, ist dem Fachmann geläufig und wird auf den nächsten Seiten unter Angabe von relevanten Literaturstellen beschrieben. Es ist dabei unerheblich, ob die eingesetzten Diisocyanate nach Phosgen- oder phosgenfreien Verfahren hergestellt wurden.

Die Lackpolyisocyanate der vorstehend genannten Art weisen bevorzugt einen Gehalt an NCO-Gruppen von 5 bis 25 Gew.-%, eine mittlere NCO-Funktionalität von 2,0 bis 5,0, vorzugsweise 2,8 bis 4,0, und einen Restgehalt an, zu ihrer Herstellung eingesetzten, monomeren Diisocyanaten von unter 1 Gew.-%, vorzugsweise unter 0,5 Gew.-% auf.

Bevorzugte Lackpolyisocyanate der vorstehend genannten Art sind diejenigen mit aliphatisch und/oder cycloaliphatisch gebundenen, freien Isocyanatgruppen.

Die vorstehend genannten Lackpolyisocyanate können auch ganz oder teilweise blockierte NCO-Gruppen aufweisen. Methoden zur Herstellung blockierter Polyisocyanate sowie Blockierungsreagenzien sind dem Fachmann bekannt. Bevorzugte Blockierungsmittel sind beispielsweise ε-Caprolactam, Butanonoxim, 3,5-Dimethylpyrazol, Triazol, Phenol, Phenolderivate, sekundäre Amine und/oder Malonsäurealkylester.

Urethangruppen-aufweisende Lackpolyisocyanate sind beispielsweise die Umsetzungsprodukte von 2,4- und gegebenenfalls 2,6-Diisocyanatotoluol oder 1-Methyl-2,4- und gegebenenfalls 1-Methyl-2.6-diisocyanatocyclohexan mit unterschüssigen Mengen an Trimethylolpropan oder dessen Gemischen mit einfachen Diolen, wie z.B. den isomeren Propan- oder Butandiolen. Die Herstellung derartiger, Urethangruppen aufweisender, Lackpolyisocyanate in nahezu monomenfreier Form ist beispielsweise in der DE-A 109 01 96 beschrieben.

Besonders bevorzugte Lackpolyisocyanate sind diejenigen der vorstehend genannten Art mit Biuret-, Isocyanurat- und/oder Iminooxadiazindionstrukturen.

Biuretgruppen-aufweisende Lackpolyisocyanate und deren Herstellung sind beispielsweise in EP-A 0 003 505, DE-A 110 139 4, US-A 3 358 010 oder US-A 3 903 127 beschrieben.

Zu den Isocyanuratgruppen-aufweisenden Lackpolyisocyanaten gehören die Trimerisate oder Mischtrimerisate der oben beispielhaft genannten Diisocyanate, wie z.B. die Isocyanuratgruppen aufweisenden Polyisocyanate auf TDI-Basis gemäß GB-A 1 060 430, GB-A 1 506 373 oder GB-A 1 485 564, die Mischtrimerisate aus TDI mit 1,6-Diisocyanatohexan, die beispielsweise gemäß DE-A 164 480 9 oder DE-A 314 467 2 zugänglich sind. Besonders bevorzugte Isocyanuratgruppen-aufweisende Lackpolyisocyanate sind die aliphatischen, aliphatisch/cycloaliphatischen und/oder cycloaliphatischen Trimerisate oder Mischtrimerisate auf Basis von 1,6-Diisocyana-tohexan und/oder Isophorondiisocyanat, die beispielsweise gemäß US-B 4 324 879, US-B 4 288 586, DE-A 310 026 2, DE-A 310 026 3, DE-A 303 386 0 oder DE-A 314 467 2 erhältlich sind.

Iminooxadiazindiongruppen aufweisende Lackpolyisocyanate und deren Herstellung sind beispielweise in EP-A 798 299, EP-A 896 009, EP-A 962 454 und EP-A 962 455 zu finden.

In den erfindungsgemäßen Bindemittelzusammensetzungen beträgt das Verhältnis zwischen gegenüber OH-Gruppen reaktiven Funktionen der Komponente C) und den Hydroxylgruppen der Komponenten A) + B) 5 : 1 bis 1 : 2, bevorzugt 1,5 : 1 bis 1 : 1,2.

In einer bevorzugten Ausführungsform der Erfindung setzt sich die Mischung der Komponenten A) bis C) aus 40 bis 65 Gew.-Teilen A), 1 bis 25 Gew.-Teilen B) und 25 bis 59 Gew.-Teilen C) zusammen, wobei sich die angegebenen Mengen zu 100 aufaddieren.

In einer besonders bevorzugten Ausführungsform der Erfindung setzt sich die Mischung der Komponenten A) bis C) aus 40 bis 60 Gew.-Teilen A), 2 bis 20 Gew.-Teilen B) und 30 bis 50 Gew.-Teilen C) zusammen, wobei sich die angegebenen Mengen zu 100 aufaddieren.

In den erfindungsgemäßen Bindemittelzusammensetzungen können neben den Komponenten A) - C) auch als Komponente D) die dem Fachmann an sich bekannten Lösemittel sowie Hilfs- und Zusatzstoffe enthalten sein.

Als optionale Lösungsmittel kommen beispielsweise in Betracht: Ethylacetat, n-Propylacetat, iso-Propylacetat, n-Butylacetat, n-Hexylacetat, n-Heptylacetat, 2-Ethylhexylacetat, Methoxypropylacetat, Methylethylketon, Methylisobutylketon, Toluol, Xylol, höhere Aromatengemische, Testbenzin oder beliebige Gemische dieser Lösungsmittel.

Sofern Lösemittel mitverwendet werden, beträgt ihr Gehalt bezogen auf die gesamte Bindemittelzusammensetzung 5 bis 50 Gew.-%, vorzugsweise 10 bis 45 Gew.-%.

Weitere, gegebenenfalls mitzuverwendende Hilfs- und Zusatzstoffe sind beispielsweise Weichmacher, wie z.B. Trikresylphosphat, Phthalsäurediester, Chlorparaffine; Pigmente und Füllstoffe, wie Titandioxid, Bariumsulfat, Kreide, Ruß; Katalysatoren, wie z.B. N,N-Dimethylbenzylamin, N-Methylmorpholin, Zinkoctoat, Zinn-II-octoat oder Dibutylzinndilaurat; Verlaufsmittel; Verdickungsmittel; gegebenenfalls Stabilisatoren, wie substituierte Phenole; organofunktionelle Silane als Haftvermittler sowie Lichtschutzmittel und UV-Absorber. Derartige Lichtschutzmittel sind beispielsweise sterisch gehinderte Amine, wie sie z.B. in DE-A 241 735 3 und DE-A 245 686 4 beschrieben sind. Besonders bevorzugte Lichtschutzmittel sind Bis-(1,2,2,6,6-pentamethylpiperidyl-4)-sebacat, Bis-(2,2,6,6-tetramethylpiperidyl-4)-sebacat, n-Butyl-(3,5-di-tert.-butyl-4-hydroxybenzyl)-malonsäure-bis-( 1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z.B. Molekularsieb-Zeolithen, entfernt werden.

Die Lösemittel, Hilfs- und Zusatzstoffe können entweder dem fertigen Gemisch der Komponenten A) - C) oder den Einzelkomponenten vor deren Durchmischung hinzugefügt werden.

Die Viskosität der erfindungsgemäßen Bindemittelzusammensetzungen, unmittelbar gemessen nach der Vereinigung der Komponenten A) bis C) sowie aller optionalen Bestandteile, beträgt 20 bis 40 s (Auslaufzeit aus ISO 5 mm Becher bei 23°C) bei einem Festkörpergehalt von 50 bis 70 Gew.-%.

Abhängig davon, wie hoch die Reaktivität der Komponenten A) + B) mit der Vernetzerkomponente C) ist, haben die erfindungsgemäßen Bindemittelzusammensetzungen eine mehr oder weniger lange Topfzeit. Die Verwendung blockierter Isocyanate in Komponente C) beispielsweise führt zu einer nur sehr langsamen Reaktionsgeschwindigkeit, so dass die entsprechenden Bindemittelzusammensetzungen erst beim thermischen Einbrennen aushärten und diese daher bei Raumtemperatur lagerstabil sind.

Die Verwendung nicht blockierter Isocyanate führt bei Raumtemperatur zu Verarbeitungszeiten der erfindungsgemäßen Bindemittelzusammensetzungen von ca. 1 bis 24 Stunden.

Die Trocknung der aus den erfindungsgemäßen Bindemittelzusammensetzungen hergestellten Lackfilme kann bei Verwendung von blockierungsmittelfreien Polyisocyanaten in Komponente C) bei Raumtemperatur erfolgen und bedarf prinzipiell keiner Temperaturerhöhung. Zur Verkürzung der Trocknungs- oder Aushärtedauer kann je nach Anwendungsgebiet und Substrat selbstverständlich eine Temperaturerhöhung beispielsweise auf 60 bis 200°C während eines Zeitraumes bis 60 Minuten angewendet werden.

Bei Einsatz von Vernetzern mit langsamerer Reaktionsgeschwindigkeit gegenüber OH-Gruppen, wie z.B. blockierten Polyisocyanaten, ist es sinnvoll eine Aushärtung bei Temperaturen von 100 bis 240°C, vorzugsweise 120 bis 220°C, während eines Zeitraumes von 1 bis 60 Minuten durchzuführen.

Im applikationsfertigen Zustand zeichnen sich die Lacke auf Basis der erfindungsgemäßen Bindemittelkombinationen durch einen hohen Festkörper und geringe Lösemittelgehalte bei gleichzeitig niedriger Viskosität aus.

Die nach Aushärtung resultierenden Lackfilme haben eine hohe Härte, eine gute Elastizität, eine ausgezeichnete Witterungs-, Lösemittel- und Chemikalienbeständigkeit, eine sehr gute Kratzfestigkeit sowie einen hohen Glanz. Die Härtungszeiten sowohl für die physikalische Antrocknung als auch die chemische Vernetzung sind kurz, so dass entsprechend beschichtete Gebrauchsgegenstände sehr schnell gegenüber Lösemitteln und Chemikalien resistent sind und in Gebrauch genommen werden können.

Die erfindungsgemäßen Beschichtungsmittel eignen sich daher zur Herstellung von Klarlacken und auch pigmentierten Lacken vor allem für die Lackierung von Großfahrzeugen, wie z.B. Flugzeugen, Eisenbahn- und Straßenbahnwaggons, LKW-Aufbauten und dergleichen. Ein weiteres bevorzugtes Einsatzgebiet besteht in ihrer Verwendung als Autoserien- und Autoreparaturlack. Weiterhin geeignet sind die Lacke für Korrosionsschutzanwendungen, wie z.B. die Beschichtung von Brücken und Strommasten, für die allgemeine Industrielackierung, die Holz- und Möbellackierung, für die Kunststofflackierung und Glaslackierung.

Die Applikation der erfindungsgemäßen Bindemittelzusammensetzungen erfolgt nach üblichen Methoden, beispielsweise durch Spritzen, Gießen, Tauchen, Fluten, Streichen, Sprühen oder Walzen. Die erfindungsgemäßen Lacke und Beschichtungsmittel eignen sich sowohl zur Herstellung von Grundierungen als auch zur Herstellung von Zwischenschichten und zur Herstellung von Deckschichten, insbesondere Klarlacken, auf den zu lackierenden Substraten.

Geeignete Substrate sind beispielsweise ggf. zuvor grundierte Metalle, Kunststoffe, Hölzer, Gläser, Stein, Keramik, Beton usw.

### Beispiele:

### Alle Prozentangaben beziehen sich, sofern nicht abweichend vermerkt, auf Gewichtsprozent.

Als Kenndaten wurden der Festgehalt (Dickschichtmethode: Deckel, 1g Probe, 1h 125°C, Konvektionsofen, Grundlage DIN EN ISO 3251), die Säurezahl (mg KOH/g Probe, Titration mit 0,1 mol/1 NaOH-Lösung, Grundlage DIN 53402), die Viskosität (Rotationsviskosimeter VT 550 der Firma Haake GmbH, Karlsruhe, DE, MV-DIN Becher bei Viskosität < 10.000 mPas/23°C), die OH-Zahl (mg KOH/g Probe, Acetylierung, Hydrolyse, Titration mit 0,1 mol/1 NaOH, Grundlage DIN 53240) und die Hazen-Farbzahl (Hazen-Farbzahl nach DIN 53995, Farbzahlmessgerät Lico® 400, Dr. Lange GmbH, Berlin, DE) bestimmt. Die Säure- und OH-Zahl werden sowohl für die Lieferform (Lff.) und für das Festharz (FH) angegeben. Der OH-Gehalt kann aus der OH-Zahl mittels Division durch 33 errechnet werden.

### Beispiel 1:

### Herstellvorschrift für die erfindungswesentlichen Copolymerisate A1 bis A8

In einem 5-l-Edelstahldruckreaktor mit Rührer, Destillationseinrichtung, Vorlagebehälter für Monomermischung und Initiator inklusive Dosierpumpen sowie automatischer Temperaturregelung wurde Teil 1 vorgelegt und unter N₂-Atmosphäre auf die gewünschte Polymerisationstemperatur von 170°C aufgeheizt. Dann wurden durch separate Zuläufe gemeinsam beginnend Teil 2 (Monomermischung) in 3 Stunden und Teil 3 (Initiatorlösung) in 3,5 Stunden zudosiert, wobei die Polymerisationstemperatur konstant (± 2°C) gehalten wurde. Anschließend wurde 60 Minuten bei der Polymerisationstemperatur nachgerührt. Dann wurde auf Raumtemperatur abgekühlt und der Festgehalt bestimmt. Die Copolymerisate sollten einen Festgehalt von 70 ± 1 % haben. Bei einem Festgehalt von ≤ 68 % wurde mit 5 % der ursprünglichen Initiatormenge bei 150°C 30 Minuten nachaktiviert. Bei einem Festgehalt zwischen 68 und 69 % wurde auf 70 ± 1 % andestilliert. Das Copolymerisat A7 hat einen Festgehalt von 80 ± 1 %. Danach wurden die Copolymerisate über einen Filter (Supra T5500, Porengröße 25 - 72 *µ*m, Seitz-Filter-Werke GmbH, Bad Kreuznach, DE) filtriert. Die Zusammensetzungen der Teile I bis III sowie die Kenndaten der erhaltenen Produkte sind in der nachfolgenden Tabelle aufgeführt.

| Copolymerisat | **A1** | **A2** | **A3** | **A4** | **A5** | **A6** | **A7** | **A8** |
|---|---|---|---|---|---|---|---|---|
| **Teil 1** | | | | | | | | |
| Butylacetat | 25,00 | 25,00 | 25,00 | 25,00 | 25,00 | 25,00 | 8,68 | 25,00 |
| Xylol | - | - | - | - | - | - | 6,32 | - |

| **Teil 2** | | | | | | | | |
|---|---|---|---|---|---|---|---|---|
| Styrol | 18,46 | 17,04 | 7,10 | 20,06 | 7,10 | 7,10 | 21,62 | 27,44 |
| Hydroxyethylmethacrylat | 27,12 | 29,82 | 32,52 | 23,96 | 32,52 | 32,52 | 23,20 | 23,00 |
| Butylacrylat | 21,16 | 19,88 | 22,86 | 22,72 | 26,41 | 27,12 | 16,12 | 17,01 |
| ε-Caprolacton | - | - | - | - | - | - | 16,45 | - |
| Isobornylacrylat | - | - | 3,55 | - | - | | - | - |
| Polybutadien Nisso® B 1000¹⁾ | 0,71 | 0,71 | 1,42 | 0,71 | 1,42 | 0,71 | 0,60 | - |
| Acrylsäure | 0,71 | 0,71 | 0,71 | 0,71 | 0,71 | 0,71 | 0,58 | 0,71 |

| **Teil 3** | | | | | | | | |
|---|---|---|---|---|---|---|---|---|
| Di-tert.-butylperoxid | 2,84 | 2,84 | 2,84 | 2,84 | 2,84 | 2,84 | 2,43 | 2,84 |
| Butylacetat | 4,00 | 4,00 | 4,00 | 4,00 | 4,00 | 4,00 | 4,00 | 4,00 |

| **Kenndaten** | | | | | | | | |
|---|---|---|---|---|---|---|---|---|
| Festgehalt, Gew.-% | 70,1 | 70,2 | 70,0 | 70,5 | 69,8 | 70,0 | 80,4 | 70,5 |
| Viskosität bei 23°C, mPa·s | 2810 | 4737 | 1571 | 2568 | 1111 | 997 | 4381 | 4810 |
| Säurezahl, Lff., mg KOH/g | 8,5 | 7,9 | 8,7 | 8,2 | 8,9 | 9,0 | 6,2 | 9,0 |
| OH-Zahl, Lff. mg KOH/g | 117 | 128 | 140 | 102 | 138 | 139 | 98 | 97 |
| OH-Gehalt, FH, Gew.-% | 5,07 | 5,54 | 6,06 | 4,38 | 5,99 | 6,02 | 3,70 | 4,2 |
| Hazen-Farbzahl, APHA | 38 | 39 | 39 | 15 | 30 | 3 | 35 | 15 |
| Alle Mengenangaben sind in Gew.-% zu verstehen. | | | | | | | | |

| | | | | | | | | |
|---|---|---|---|---|---|---|---|---|
| ¹⁾ : Handelsprodukt der Nippon Soda, Japan | | | | | | | | |

### Beispiel 2:

### Erfindungsgemäß einzusetzende Polyole B)

### Polyol B1:

In einen Reaktor gemäß Beispiel 1 wurden 3155 g Trimethylolpropan und 1345 g ε-Caprolacton und 2,2 g Dibutylzinndilaurat (DBTL) eingewogen. Der Kesselinhalt wurde auf 160°C aufgeheizt, 6 Stunden bei 160°C gerührt und anschließend auf 20°C abgekühlt, wobei ein nahezu farbloses Harz mit folgenden Kenndaten erhalten wurde:

| | |
|---|---|
| Festgehalt | 99,5 Gew.-% |
| Viskosität bei 23°C | 4100 mPa·s |
| Säurezahl | 0,5 mg KOH/g |
| Hydroxylzahl | 881 mg KOH/g |
| Hydroxylgehalt | 26,7 Gew.-% |
| Hazen-Farbzahl | 44 APHA |
| Aussehen | klar |

### Polyol B2

Analog Polyol B1 wurden 2746 g Trimethylolpropan und 1754 g ε-Caprolacton in Gegenwart von 2,2 g DBTL umgesetzt. Es resultierte ein Harz mit folgenden Kenndaten:

| | |
|---|---|
| Festgehalt | 99,2 Gew.-% |
| Viskosität bei 23°C | 3403 mPa·s |
| Säurezahl | 0,7 mg KOH/g |
| Hydroxylzahl | 765 mg KOH/g |
| Hydroxylgehalt | 23,2 Gew.-% |
| Hazen-Farbzahl | 36 APHA |
| Aussehen | klar |

### Polyol B3

Analog Polyol B1 wurden 2012 g Glycerin und 2488 g ε-Caprolacton in Gegenwart von 2,2 g DBTL umgesetzt. Es resultiert ein Harz mit folgenden Kenndaten:

| | |
|---|---|
| Festgehalt | 99,4 Gew.-% |
| Viskosität bei 23°C | 1091 mPa·s |
| Säurezahl | 0,9 mg KOH/g |
| Hydroxylzahl | 840 mg KOH/g |
| Hydroxylgehalt | 25,5 Gew.-% |
| Hazen-Farbzahl | 32 APHA |
| Aussehen | klar |

### Polyol B4

Analog Polyol B1 wurden 1266 g Trimethylolpropan und 3231 g ε-Caprolacton in Gegenwart von 2,2 g DBTL umgesetzt. Es resultierte ein Harz mit folgenden Kenndaten:

| | |
|---|---|
| Festgehalt | 99,9 Gew.-% |
| Viskosität bei 23°C | 1631 mPa·s |
| Säurezahl | 0,6 mg KOH/g |
| Hydroxylzahl | 356 mg KOH/g |
| Hydroxylgehalt | 10,8 Gew.-% |
| Hazen-Farbzahl | 16 APHA |
| Aussehen | klar |

### Polyol B5

Analog Polyol B1 wurden 2430 g Trimethylolpropan und 2070 g ε-Caprolacton in Gegenwart von 2,2 g DBTL umgesetzt. Es resultierte ein Harz mit folgenden Kenndaten:

| | |
|---|---|
| Festgehalt | 99,4 Gew.-% |
| Viskosität bei 23°C | 2602 mPa·s |
| Säurezahl, Lff/FH | 0,9 mg KOH/g |
| Hydroxylzahl, Lff/FH | 640/644 mg KOH/g |
| Hydroxylgehalt | 19,4 Gew.-% |
| Hazen-Farbzahl | 54 APHA |
| Aussehen | klar |

### Polyol B6

Analog Polyol B1 wurden 1757 g Trishydroxyethylisocyanurat und 2743 g ε-Caprolacton in Gegenwart von 2,2 g DBTL umgesetzt. Es resultierte ein Harz mit folgenden Kenndaten:

| | |
|---|---|
| Festgehalt | 99,5 Gew.-% |
| Viskosität bei 23°C | 3245 mPa·s |
| Säurezahl | 1.0 mg KOH/g |
| Hydroxylzahl | 300 mg KOH/g |
| Hydroxylgehalt | 9,1 Gew.-% |
| Hazen-Farbzahl | 52 APHA |
| Aussehen | klar |

### Polyol B7

Desmophen® C 200, ein lösemittelfreier aliphatischer Polycarbonatester mit einem Hydroxylgruppengehalt von 1,7 Gew.-%, Handelsprodukt der Bayer AG, Leverkusen, DE.

### Vergleichsbeispiel 1

### Nachstellung des Copolymers 2 gemäß den Angaben der EP-A 638 591 als Vergleichsharz V1

In einem Reaktor gemäß Beispiel 1 wurde Teil 1 [690 g Cardura® E10 (Glycidylester von Resolution Belgium S.A., Ottignies-Louvain-La-Neuve)] vorgelegt und auf 185°C aufgeheizt. Dann wurden durch separate Zuläufe gemeinsam beginnend Teil 2 [Monomermischung aus 222 g Acrylsäure, 758 g Hydroxyethylmethacrylat, 965 g Isobornylacrylat, 127 g Methylmethacrylat und 606 g Styrol] in 6 Stunden und Teil 3 [Initiatorlösung aus 52 g Di-tert.-butylperoxid und 180 g Butylacetat] ebenfalls in 6 Stunden zudosiert, wobei die Polymerisationstemperatur von 185°C konstant (± 2°C) gehalten wurde. Anschließend wurde 120 Minuten bei 185°C nachgerührt, auf 40°C abgekühlt und der Festgehalt bestimmt. Es wurde ein Festgehalt von 94,7 Gew.-% gefunden. Der Kesselinhalt wurde anschließend mit 946 g Butylacetat auf einen Festgehalt von 75 Gew.-% eingestellt, auf Raumtemperatur abgekühlt und filtriert (Supra T5500, Porengröße 25 - 72 *µ*m, Seitz-Filter-Werke GmbH, Bad Kreuznach, DE).

Es wurde ein Produkt mit folgenden Kenndaten erhalten:

| | |
|---|---|
| Festgehalt | 74,8 % |
| Viskosität bei 23°C | 6850 mPa·s |
| Säurezahl, Lff./FH | 8,4 / 11,2 mg KOH/g |
| Hydroxylzahl, Lff/FH | 111 /148 mg KOH/g |
| Hazen-Farbzahl | 58 APHA |
| Aussehen | klar |

### Vergleichsbeispiel 2

### Nachstellung des Copolymers A3 gemäß den Angaben der EP A 778 298 als Vergleichsharz V2

In einem Reaktor gemäß Beispiel 1 wurde Teil 1 [675 g Butylacetat, 423 g 1-Decen und 378 g VeoVa® 9 (Vinylester von Resolution Belgium S.A., Ottignies-Louvain-La-Neuve)] vorgelegt und auf 190°C aufgeheizt. Dann wurden durch separate Zuläufe gemeinsam beginnend Teil 2 [Monomermischung aus 63 g Acrylsäure, 1035 g Hydroxyethylmethacrylat, 36 g Polybutadien ® Lithene AL (Chemetall GmbH, Frankfurt, DE) und 1485 g Styrol] in 1,5 Stunden und Teil 3 [Initiatorlösung aus 225 g Di-tert.-butylperoxid und 180 g Butylacetat] in 1,75 Stunden zudosiert, wobei die Polymerisationstemperatur von 190°C konstant (± 2°C) gehalten wurde. Anschließend wurde 30 Minuten bei 190°C nachgerührt, auf 23°C abgekühlt und der Festgehalt bestimmt. Es wurde ein Festgehalt von 74,6 Gew.-% gefunden. Der Kesselinhalt wurde anschließend filtriert (Supra T5500, Porengröße 25 - 72 *µ*m, Seitz-Filter-Werke GmbH, Bad Kreuznach, DE).

Es wurde ein Produkt mit folgenden Kenndaten erhalten:

| | |
|---|---|
| Festgehalt | 74,7 % |
| Viskosität bei 23°C | 6124 mPa·s |
| Säurezahl, Lff./FH | 12,3 / 16,5 mg KOH/g |
| Hydroxylzahl, Lff./FH | 99 / 133 mg KOH/g |
| Hazen-Farbzahl | 46 APHA |
| Aussehen | klar |

### Vergleichsbeispiel 3

### Herstellung eines Polyolbindemittels auf Basis eines Polyacrylat-Polyesterpolyol-Blends als V3

### Herstellung des Polyacrylatpolyols A9:

Analog Beispiel 1 wurde ein hydroxyfunktionelles Copolymerisat aus folgenden Rohstoffen bei einer Polymerisations- und Nachrührtemperatur von 150°C hergestellt: Teil 1: 35,00 Gew.-% Butylacetat, Teil 2: 24,68 Gew.-% Styrol, 19,15 Gew.-% Hydroxyethylmethacrylat, 14,45 Gew.-% Butylacrylat, 0,57 Gew.-% Acrylsäure, Teil 3: 2,15 Gew.-% Di-tert.-butylperoxid und 4,00 Gew.-% Butylacetat. Es wurde eine Polymerisatlösung mit folgenden Kenndaten erhalten:

| | |
|---|---|
| Festgehalt | 61,0 % |
| Viskosität bei 23°C | 2412 mPa·s |
| Säurezahl, Lff/FH | 7,0 / 11,5 mg KOH/g |
| Hydroxylzahl, Lff/FH | 83 / 136 mg KOH/g |
| Hazen-Farbzahl | 15 APHA |
| Aussehen | klar |

### Herstellung des Polyesterpolyols B8:

877 g 2-Ethylhexansäure, 1853 g Trimethylolpropan wurden in einen 5-1-Rührkessel, der mit einem Rührer, einer Destillationsbrücke mit Kolonne und einem Stickstoffeinleitungsrohr ausgerüstet ist, eingewogen und auf 125°C erwärmt. Während der Aufheizphase wurde das einfache Kesselvolumen N₂/h durchgeleitet. Bei 125°C wurden 1282 g Hexahydrophthalsäureanhydrid und 488 g Adipinsäure zugegeben, der N₂-Strom auf das doppelte Kesselvolumen/h gesteigert und unter einer Kopftemperaturbegrenzung von max. 102°C auf 210°C aufgeheizt. Dabei wurde das Reaktionswasser abgespalten und gegen Ende eine Sumpftemperatur von 210°C erreicht. Es wurde dann bei 210°C so lange kondensiert, bis eine Säurezahl von ≤ 10 mg KOH/g erreicht war. Es resultierten 3980 g eines Polykondensationsproduktes mit einer Säurezahl von 9,6 mg KOH/g und einer OH-Zahl von 180 mg KOH/g. Zu 3375 g dieses Harzes wurden unter Rühren 1125 g Xylol gegeben. Es resultierte eine Lösung mit einem Feststoffgehalt von 75 Gew.-%, einer Säurezahl von 7,1 mg KOH/g, einer OH-Zahl von 135 mg KOH/g und einer Viskosität von 4661 mPa·s.

### Herstellung eines Polyacrylat-Polyesterpolyol-Blends V3:

65 Gew.-Teile des Polyacrylatpolyols A9 und 35 Gew.-Teile des Polyesterpolyols B8 wurden in einem 51 Rührkessel 1 Stunde bei 60°C gerührt, dann auf 30°C abgekühlt und filtriert (Supra T5500, Porengröße 25 - 72 *µ*m, Seitz-Filter-Werke GmbH, Bad Kreuznach, DE). Es resultierte eine Polyester/Polyacrylatlösung, 65 %-ig in Butylacetat/Xylol (3:1), mit folgenden Kenndaten:

| | |
|---|---|
| Festgehalt | 65,1 % |
| Viskosität bei 23°C | 3682 mPa·s |
| Säurezahl, Lff/FH | 7,0 / 10,7 mg KOH/g |
| Hydroxylzahl, Lff/FH | 101 / 155 mg KOH/g |
| Hazen-Farbzahl | 25 APHA |
| Aussehen | klar |

### Beispiel 3

### Herstellung von Mischungen der Copolymerisate A1 - A8 mit Polyolen B1 - B7

Copolymerisate und Polyole wurden in den angegebenen Mengenverhältnissen miteinander bei 60°C für 60 min verrührt.

### Polyol AB1:

Mischung aus Copolymerisat A6) und Polyol B1) im Verhältnis 9:1 (bezogen auf Festharz). Das resultierende Gemisch wurde mit Butylacetat auf einen Festgehalt von 70 % eingestellt, wobei ein farbloses Polyolharz mit den folgenden Kenndaten erhalten wurde:

| | |
|---|---|
| Festgehalt | 70,2 Gew.-% |
| Viskosität bei 23°C | 963 mPa·s |
| Säurezahl, Lff./FH | 7,9 / 11,2 mg KOH/g |
| Hydroxylzahl, Lff./FH | 189 / 269 mg KOH/g |
| Hazen-Farbzahl | 7 APHA |
| Aussehen | klar |

### Polyol AB2:

Mischung aus Copolymerisat A4) und Polyol B1) im Verhältnis 9:1 (bezogen auf Festharz). Das resultierende Gemisch wurde mit Butylacetat auf einen Festgehalt von 70 % eingestellt, wobei ein farbloses Polyolharz mit den folgenden Kenndaten erhalten wurde:

| | |
|---|---|
| Festgehalt | 69,5 Gew.-% |
| Viskosität bei 23°C | 1457 mPa·s |
| Säurezahl, Lff./FH | 7,3 / 10,5 mg KOH/g |
| Hydroxylzahl, Lff./FH | 152 / 219 mg KOH/g |
| Hazen-Farbzahl | 17 APHA |
| Aussehen | klar |

### Polyol AB3:

Mischung aus Copolymerisat A8) und Polyol B1) im Verhältnis 86,3:13,7 (bezogen auf Festharz). Das resultierende Gemisch wurde mit Butylacetat auf einen Festgehalt von 70 % eingestellt, wobei ein farbloses Polyolharz mit den folgenden Kenndaten erhalten wurde:

| | |
|---|---|
| Festgehalt | 70,0 Gew.-% |
| Viskosität bei 23°C | 1663 mPa·s |
| Säurezahl, Lff./FH | 6,6 / 9,4 mg KOH/g |
| Hydroxylzahl, Lff./FH | 167 / 239 mg KOH/g |
| Hazen-Farbzahl | 27 APHA |
| Aussehen | klar |

### Polyol AB4:

Mischung aus Copolymerisat A5) und Polyol B3) im Verhältnis 9:1 (bezogen auf Festharz). Das resultierende Gemisch wurde mit Butylacetat auf einen Festgehalt von 70 % eingestellt, wobei ein farbloses Polyolharz mit den folgenden Kenndaten erhalten wurde:

| | |
|---|---|
| Festgehalt | 70,2 Gew.-% |
| Viskosität bei 23°C | 1261 mPa·s |
| Säurezahl, Lff./FH | 8,1/11,5 mg KOH/g |
| Hydroxylzahl, Lff./FH | 186/265 mg KOH/g |
| Hazen-Farbzahl | 32 APHA |
| Aussehen | klar |

### Polyol AB5:

Mischung aus Copolymerisat A3) und Polyol B5) im Verhältnis 9:1 (bezogen auf Festharz). Das resultierende Gemisch wurde mit Butylacetat auf einen Festgehalt von 70 % eingestellt, wobei ein farbloses Polyolharz mit den folgenden Kenndaten erhalten wurde:

| | |
|---|---|
| Festgehalt | 70,5 Gew.-% |
| Viskosität bei 23°C | 1181 mPa·s |
| Säurezahl, Lff./FH | 8,2/11,6 mg KOH/g |
| Hydroxylzahl, Lff./FH | 175/248 mg KOH/g |
| Hazen-Farbzahl | 33 APHA |
| Aussehen | klar |

### Polyol AB6:

Mischung aus Copolymerisat A7) und Polyol B4) im Verhältnis 9:1 (bezogen auf Festharz). Das resultierende Gemisch wurde mit Butylacetat auf einen Festgehalt von 80 % eingestellt, wobei ein farbloses Polyolharz mit den folgenden Kenndaten erhalten wurde:

| | |
|---|---|
| Festgehalt | 80,3 Gew.-% |
| Viskosität bei 23°C | 3303 mPa·s |
| Säurezahl, Lff./FH | 5,4 / 6,8 mg KOH/g |
| Hydroxylzahl, Lff./FH | 123 / 154 mg KOH/g |
| Hazen-Farbzahl | 28 APHA |
| Aussehen | klar |

### Polyol AB7:

Mischung aus Copolymerisat A1) und Polyol B7) im Verhältnis 9:1 (bezogen auf Festharz). Das resultierende Gemisch wurde mit Butylacetat auf einen Festgehalt von 70 % eingestellt, wobei ein farbloses Polyolharz mit den folgenden Kenndaten erhalten wurde:

| | |
|---|---|
| Festgehalt | 69,8 Gew.-% |
| Viskosität bei 23°C | 1803 mPa·s |
| Säurezahl, Lff./FH | 7,5 / 10,7 mg KOH/g |
| Hydroxylzahl, Lff./FH | 109 / 156 mg KOH/g |
| Hazen-Farbzahl | 34 APHA |
| Aussehen | klar |

### Polyol AB8:

Mischung aus Copolymerisat A2) und Polyol B7) im Verhältnis 85:15 (bezogen auf Festharz). Das resultierende Gemisch wurde mit Butylacetat auf einen Festgehalt von 70 % eingestellt, wobei ein farbloses Polyolharz mit den folgenden Kenndaten erhalten wurde:

| | |
|---|---|
| Festgehalt | 70,1 Gew.-% |
| Viskosität bei 23°C | 2568 mPa·s |
| Säurezahl, Lff./FH | 6,5 / 9,3 mg KOH/g |
| Hydroxylzahl, Lff./FH | 116 / 165 mg KOH/g |
| Hazen-Farbzahl | 32 APHA |
| Aussehen | klar |

### Polyol AB9:

Mischung aus Copolymerisat A7) und Polyol B4) im Verhältnis 95:5 (bezogen auf Festharz). Das resultierende Gemisch wurde mit Butylacetat auf einen Festgehalt von 80 % eingestellt, wobei ein farbloses Polyolharz mit den folgenden Kenndaten erhalten wurde:

| | |
|---|---|
| Festgehalt | 80,2 Gew.-% |
| Viskosität bei 23°C | 4154 mPa·s |
| Säurezahl, Lff./FH | 6,0 / 7,5 mg KOH/g |
| Hydroxylzahl, Lff./FH | 112 / 140 mg KOH/g |
| Hazen-Farbzahl | 32 APHA |
| Aussehen | klar |

### Polyol AB10:

Mischung aus Copolymerisat A7) und Polyol B4) im Verhältnis 85:15 (bezogen auf Festharz). Das resultierende Gemisch wurde mit Butylacetat auf einen Festgehalt von 80 % eingestellt, wobei ein farbloses Polyplharz mit den folgenden Kenndaten erhalten wurde:

| | |
|---|---|
| Festgehalt | 80,2 Gew.-% |
| Viskosität bei 23°C | 2592 mPa·s |
| Säurezahl, Lff./FH | 5,1 / 6,4 mg KOH/g |
| Hydroxylzahl, Lff./FH | 130 / 163 mg KOH/g |
| Hazen-Farbzahl | 25 APHA |
| Aussehen | klar |

### Polyol AB11:

Dieses Beispiel beschreibt die Herstellung eines Polyacrylatpolyols vom Typ A) in gegenwart eines Polyols vom Typ B):

In einem 15-l-Edelstahldurchreaktor mit Rührer, Destillationseinrichtung, Vorlagebehälter für Monomermischung und Initiator inklusive Dosierpumpen sowie automatischer Temperaturregelung wurde Teil 1 (3128 g Butylacetat und 988 g Polyol B1) vorgelegt und unter N₂-Atmosphäre auf eine Polymerisationstemperatur von 170°C aufgeheizt. Dann wurden durch separate Zuläufe gemeinsam beginnend Teil 2 (Monomermischung aus 2221 g Styrol, 4069 g Hydroxyethylmethacrylat, 2061 g Butylacrylat, 89 g Polybutadien Nisso B1000 und 89 Acrylsäure) in 3 Stunden und Teil 3 (Lösung aus 355 g Di-tert.-butylperoxid und 500 g butylacetat) in 3,5 Stunden zudosiert, wobei die Polymerisationstemperatur konstant (± 2°C) gehalten wurde. Anschließend wurde 60 Minuten bei der Polymerisationstemperatur nachgerührt. Dann wurde auf Raumtemperatur abgekühlt und der Festgehalt bestimmt. Das Produkt sollte einen Festgehalt von 70 ± 1 % haben. Bei einem Festgehalt von ≤ 68 % wurde mit 5 % der ursprünglichen Initiatormenge bei 150°C 30 Minuten nachaktiviert. Bei einem Festgehalt zwischen 68 und 69 % wurde auf 70 ± 1 % andestilliert. Danach wurde das Produkt über einen Filter (Supra T5500, Porengröße 25 - 72 *µ*m, Seitz-Filter-Werke GmbH, Bad Kreuznach, DE) filtriert. Es wurden ca. 13 kg eines Polyols mit folgenden Kenndaten erhalten:

| | |
|---|---|
| Festgehalt | 71,0 Gew.-% |
| Viskosität bei 23°C | 1742 mPa·s |
| Säurezahl | 7,0 mg KOH/g |
| Hydroxylzahl | 198 mg KOH/g |
| Hydroxylgehalt | 6,0 Gew.-% |
| Hazen-Farbzahl | 24 APHA |
| Aussehen | klar |

Gegenüber den Vergleichspolyolen zeichnen sich die erfindungsgemäßen Polyolmischungen vom AB-Typ durch eine deutlich niedrigere Viskosität bei vergleichbarem Festkörpergehalt und einen durchweg höheren Hydroxylgehalt aus.

### Beispiel 4:

### Lacktechnische Prüfungen

Als erfindungsgemäß zu verwendende Polyolmischungen wurden die Polyole AB1 - AB3, AB7 und AB8 eingesetzt. Demgegenüber wurden vergleichend die Copolymere des Standes der Technik V1, V2 und V3 sowie Copolymerisat A8 allerdings nicht erfindungsgemäß ohne Kombination mit einem Polyol vom Typ B) eingesetzt.

Zur Beurteilung der Lackeigenschaften wurden Klarlacke hergestellt. Dazu wurden die Polyolmischungen AB1 - AB3, AB7, AB8 sowie die Vergleichspolyole A8, V1, V2 und V3 mit 0,1 Gew.-% Baysilone® OL 17 (Verlaufsmittel der Borchers GmbH, Langenfeld, DE), 0,01 Gew.-% Modaflow® (Verlaufsmittel der Monsanto Deutschland GmbH, DE, 1 Gew.-%-ig in Xylol), 1,5 Gew.-% Tinuvin® 384 (UV-Absorber der Ciba Geigy, Basel, CH, 50 Gew.-%-ig in Methoxypropylacetat (MPA)) und 1,0 Gew.-% Tinuvin® 292 (Lichtschutzmittel der Ciba Geigy, Basel, CH, 50 gew.-%-ig in MPA) versetzt (die Mengenangaben in % sind jeweils bezogen auf die zugrundeliegende Menge an Festharz).

Kurz vor der Applikation wurde das Lackpolyisocyanat zugegeben, wobei ein NCO/OH-Verhältnis von ca. 1 : 1 eingehalten wurde, und mit Methoxypropylacetat (MPA) auf eine Viskosität von ca. 35 s (Auslaufzeit aus ISO 5 mm Becher bei 23°C) eingestellt. Bis zur Verarbeitung wurde der Lack noch ca. 10 Minuten zur Entlüftung stehen gelassen.

Als Lackpolyisocyanate dienten Desmodur® N 3390 (Bayer AG, Leverkusen, DE), ein Isocyanuratgruppen enthaltendes Polyisocyanat auf Basis 1,6-Diisocyanatohexan, 90 %-ig gelöst in Butylacetat/ Solvesso® 100 (Esso AG, Köln, DE) (1 : 1); NCO-Gehalt der Lösung: ca. 19,4 Gew.-%, und Desmodur® XP 2410 (Bayer AG, Leverkusen, DE), ein Iminooxadiazindiongruppen enthaltendes Polyisocyanat auf Basis von 1,6-Diisocyanatohexan, 100%-ig, NCO-Gehalt ca. 24 Gew.-%.

Die Lacke wurden durch Spritzapplikation in einem Kreuzgang auf den vorbereiteten Untergrund appliziert. Nach einer Ablüftzeit von 10 bis 15 Minuten wurden die Lacke 30 Minuten bei 130°C eingebrannt und anschließend 16 h bei 60°C gelagert. Die Trockenfilmdicke betrug 40 ± 5 *µ*m. Mit der lacktechnischen Prüfung wurde 2 Stunden nach der Lagerung begonnen.

Es wurden die Filmhärte auf Glas [Pendeldämpfung nach König (DIN EN ISO 1522)], Glanz und Haze im 20°-Winkel (DIN 67 530, ISO 2813), die Anlösbarkeit durch Xylol, MPA, Ethylacetat und Aceton, die Elastizität [Erichsen-Tiefung (DIN ISO 1520)], die Beständigkeit gegen Baumharz, Bremsflüssigkeit, Pankreatin (50 %-ig), Natronlauge (1 %-ig) und Schwefelsäure (1 %-ig), die Benzinbeständigkeit (DIN 51604), die Kratzfestigkeit (DIN 55668), die Thermovergilbungsstabilität (DIN 6174) und die Kondenswasserbeständigkeit (DIN 50017) geprüft. Weiterhin wurden die Lacke einem Kurzbewitterungstest [W-o-m Ci 65/CAM 180 (VDA 621-429/430 SAE J 1960)] und einem QUV UVB 313 Test (DIN EN ISO 4892 T.3) unterzogen.

| Polyol | AB1 | AB1 | AB2 | AB3 | AB7 | AB8 |
|---|---|---|---|---|---|---|
| Vernetzer Desmodur® | XP 2410 | N 3390 | N 3390 | N 3390 | N 3390 | N 3390 |
| Spritzfestkörper [Gew.-%] | 65,0 | 63,0 | 59,0 | 60,0 | 58,3 | 57,3 |
| Pendeldämpfung nach König[s] | 184 | 181 | 184 | 195 | 177 | 165 |
| Lösemittelbeständigkeit [Note]¹⁾ 1 min | 0023 | 0012 | 0023 | 0123 | 0023 | 0003 |
| (Xyl./MPA/EA/Aceton) 5 min | 0034 | 0034 | 0134 | 0134 | 1134 | 0134 |
| Erichsentiefung [mm] | 9,5 | 9,5 | 9,5 | 9,0 | 9,0 | 9,5 |
| Chemikalienbeständigkeit [°C]²⁾ | | | | | | |
| Baumharz | 38 | 38 | 38 | 40 | 38 | 38 |
| Bremsflüssigkeit | 36 | 36 | 36 | 36 | 36 | 36 |
| Pankreatin, 50%ig | 36 | 36 | 36 | 36 | 36 | 36 |
| Natronlauge, 1%ig | 37 | 43 | 47 | 44 | 40 | 41 |
| Schwefelsäure, 1%ig | 42 | 45 | 46 | 44 | 42 | 43 |
| Benzinfestigkeit FAM, 10 min [Note]¹⁾ | 2 | 2 | 2 | 2 | 1 | 1 |
| Kratzfestigkeit (Laborwaschanlage)³⁾ | | | | | | |
| Ausgangsglanz, 20° | 85,8 | 87,0 | 89,1 | 90,0 | 88,6 | 88,7 |
| Glanzverlust (ΔGI.) n. 10 Zyklen, 20° | 19,2 | 17,1 | 18,9 | 31,7 | 16,9 | 17,6 |
| Relativer Restglanz (RR) [%] | 77,6 | 80,3 | 78,8 | 64,8 | 80,9 | 80,1 |
| RR nach Reflow 2 h 60°C [%] | 88,9 | 90,4 | 91,2 | 88,0 | 89,2 | 89,7 |
| Thermovergilbung | | | | | | |
| (LM-BL/H₂O-BL)⁴⁾ | | | | | | |
| Ausgangsvergilbung [b] | 2,4 / 2,4 | 2,1 / 2,1 | 2,0 / 2,1 | 2,0 / 2,2 | 2,0/2,1 | 2,0 / 2,2 |
| Vergilbung nach 30 min. 150°C [Δb] | 0,4 / 0,0 | 0,4 / 0,0 | 0,4 / 0,0 | 0,0 / 0,2 | 0,4 / 0,0 | 0,4 / 0,0 |
| Kondenswassertest (240 h bei 40°C) | | | | | | |
| Schäden⁵⁾ | o. B. | o. B. | o. B. | o. B. | o. B. | o. B. |

| | | | | | | |
|---|---|---|---|---|---|---|
| ¹⁾ 0 = bester Wert (ohne Befund), 5 = schlechtester Wert (Lackfilm an der belasteten Stelle vollständig aufgelöst), | | | | | | |
| ²⁾ Gradientenofenmethode (je höher die Temperatur bis zur sichtbaren Schädigung, desto beständiger ist der Lackfilm) | | | | | | |
| ³⁾ Alter der Waschbürste ca. 36 Betriebsstunden | | | | | | |
| ⁴⁾ Klarlack auf lösemittelhaltigen Basislack / Klarlack auf Wasserbasislack | | | | | | |
| ⁵⁾ B 1/1 : Blasen Menge/Größe, o. B. = ohne Befund | | | | | | |

| Polyol | A8 | V1 | V2 | V3 |
|---|---|---|---|---|
| Vernetzer Desmodur® | N 3390 | N 3390 | N 3390 | N3390 |
| Spritzfestkörper [Gew.-%] | 55,0 | 54,0 | 56,0 | 52,5 |
| Pendeldämpfung nach König [s] | 199 | 187 | 189 | 206 |
| Lösemittelbeständigkeit [Note]¹⁾ 1 min | 012 | 0023 | 0123 | 0013 |
| (Xyl./MPA/EA/Aceton) 5 min | 1134 | 1134 | 1134 | 0024 |
| Erichsentiefung [mm] | 9,0 | 8,5 | 9,0 | 9,5 |
| Chemikalienbeständigkeit [°C]²⁾ | | | | |
| Baumharz | 42 | 40 | 38 | 36 |
| Bremsflüssigkeit | 36 | 36 | 36 | 36 |
| Pankreatin, 50%ig | 36 | 36 | 36 | 36 |
| Natronlauge, 1%ig | 45 | 38 | 38 | 42 |
| Schwefelsäure, 1%ig | 46 | 42 | 40 | 46 |
| Benzinfestigkeit FAM, 10 min. [Note]¹⁾ | 2 | 2 | 2 | 2 |
| Kratzfestigkeit (Laborwaschanlage)³⁾ | | | | |
| Ausgangsglanz, 20° | 91,1 | 89,5 | 90,2 | 89,0 |
| Glanzverlust (ΔGI.) n. 10 Zyklen, 20° | 37,6 | 36,3 | 38,7 | 35,0 |
| Relativer Restglanz (RR) [%] | 58,7 | 59,4 | 57,1 | 60,7 |
| RR nach Reflow 2 h 60°C [%] | 82,8 | 83,3 | 81,6 | 83,5 |
| Thermovergilbung (LM-BL/H₂O-BL)⁴⁾ | | | | |
| Ausgangsvergilbung [b] | 1,9/1,9 | 2,2 / 2,2 | 2,4 / 2,4 | 2,2 / 2,4 |
| Vergilbung nach 30 min. 150°C [Δb] | 0,4 / 0,0 | 0,4 / 0,0 | 0,4 / 0,0 | 0,4 / 0,0 |
| Kondenswassertest (240 h bei 40°C) | | | | |
| Schäden⁵⁾ | B 1/1 | B 1/1 | B 2/2 | B 1/1 |

| | | | | |
|---|---|---|---|---|
| ¹⁾ 0 = bester Wert (ohne Befund), 5 = schlechtester Wert (Lackfilm an der belasteten Stelle vollständig aufgelöst), | | | | |
| ²⁾ Gradientenofenmethode (je höher die Temperatur bis zur sichtbaren Schädigung, desto beständiger ist der Lackfilm) | | | | |
| ³) Alter der Waschbürste ca. 36 Betriebsstunden | | | | |
| ⁴⁾ Klarlack auf lösemittelhaltigen Basislack / Klarlack auf Wasserbasislack | | | | |
| ⁵) B 1/1 : Blasen Menge/Größe, o. B. = ohne Befund | | | | |

Die erfindungsgemäßen Bindemittelzusammensetzungen auf Basis der Polyole AB1 -AB3, AB7 und AB8 haben einen sehr hohen Festkörpergehalt bei vorgegebener Applikationsviskosität und liefern Beschichtungen mit guter Lösemittel- und Chemikalienbeständigkeit. Benzinfestigkeit, Glanz, Elastizität, Filmhärte und Thermovergilbung liegen auf hohem Niveau, vergleichbar mit heutigen Standardsystemen (Vergleichsversuche), die allerdings einen wesentlich höheren Lösungsmittelgehalt und daher geringeren Festgehalt bei Applikationsviskosität haben.

Entscheidende Vorteile haben die erfindungsgemäßen Bindemittelzusammensetzungen auf Basis der Polyole vom AB-Typ bei der Höhe des Festkörpergehalts bei Applikationsviskosität und bei der Kratzfestigkeit der resultierenden Beschichtungen.

Die erfindungsgemäßen Beschichtungsmittel liefern Beschichtungen mit sehr hohem relativen Restglanz (insbesondere auch nach Reflow), während Klarlacke auf Basis der Standardpolyole A8, V1, V2 und V3 bezüglich der Kratzfestigkeit sehr viel schlechtere relative Restglanzwerte und Reflow-Werte erreichen.

Die Prüfergebnisse zeigen somit deutlich, dass Klarlacke auf Basis der erfindungsgemäßen Polyolzusammensetzungen im Vergleich zu Polyolen des Standes der Technik einen deutlich höheren Lackfestkörper bei vorgegebener Applikationsviskosität haben und die Lackfilme neben vergleichbarem lacktechnischen Eigenschaftsniveau eine wesentlich besserer Kratzfestigkeit aufweisen als 2K PUR-Lacke auf Basis von Standardpolyolen. Somit sind die erfindungsgemäßen Beschichtungsmittel besonders gut geeignet für die Beschichtung von Kraftfahrzeugen.

## Patentansprüche

1. Bindemittelzusammensetzungen enthaltend
A) ein oder mehrere hydroxyfunktionelle Polyacrylatharze,
B) ein oder mehrere ε-Caprolacton-basierende Polyole mit einer mittleren Hydroxyfunktionalität ≥ 2 und einem zahlenmittleren Molekulargewicht von 119 bis 2.000 g/mol,
C) ein oder mehrere gegenüber OH-Gruppen reaktive Vernetzer einer mittleren Funktionalität > 1 und
D) optional Lösemittel, Hilfs- und Zusatzstoffe,
**dadurch gekennzeichnet, dass** die Polyacrylatharze der Komponente A) durch Copolymerisation hergestellt werden aus:
a) 0-10 Gew.-Teilen eines oder mehrerer, gegebenenfalls funktioneller, Polybutadiene mit einem zahlenmittleren Molekulargewicht von 500 bis 10.000 g/mol und mit einem Anteil an 1,2-seitenständigen vinylischen Doppelbindungen von mindestens 10 mol.-% bezogen auf alle enthaltenen vinylischen Doppelbindungen des Polybutadiens,
b) 1-30 Gew.-Teilen eines oder mehrerer ungesättigter, aromatischer Monomere ausgewählt aus der Gruppe Styrol, α-Methylstyrol und Vinyltoluol,
c) 30 - 80 Gew.-Teilen eines oder mehrerer Hydroxyalkylester der Acryl- oder Methacrylsäure mit primären Hydroxylgruppen,
d) 0 - 30 Gew.-Teilen eines oder mehrerer cycloaliphatischer Ester aus Acryl- oder Methacrylsäure und C₃ bis C₁₂ Monoalkoholen,
e) 10 - 60 Gew.-Teilen eines oder mehrerer aliphatischer Ester aus Acryl- oder Methacrylsäure und C₁ bis C₈ Monoalkoholen,
f) 0,1 - 5 Gew.-Teilen einer oder mehrerer α,β-ungesättigter C₃ - C₇ Mono- oder Dicarbonsäuren oder eines oder mehrerer Halbester der Maleinsäure- oder Fumarsäure und C₁ bis C₁₄ Monoalkoholen und
g) 0-30 Gew.-Teilen weiterer von den Verbindungen der Komponenten a) - f) verschiedener copolymerisierbarer Verbindungen,
wobei jeweils die Summe der Gew.-Teile der Komponenten a) bis g) 100 beträgt.

2. Bindemittelzusammensetzungen gemäß Anspruch 1, **dadurch gekennzeichnet, dass** die Copolymerisate der Komponente A) bestehen aus:
a) 0,4 - 5 Gew.-Teilen eines oder mehrerer, gegebenenfalls funktioneller, Polybutadiene mit einem zahlenmittleren Molekulargewicht von 500 bis 2.000 g/mol und mit einem Anteil an 1,2-seitenständigen vinylischen Doppelbindungen von mindestens 40 mol.-% bezogen auf alle enthaltenen vinylischen Doppelbindungen des Polybutadiens,
b) 5 - 20 Gew.-Teilen Styrol,
c) 40 - 60 Gew.-Teilen Hydroxyethylacrylat, Hydroxyethylmethacrylat oder deren Mischungen,
d) 0 - 15 Gew.-Teilen einer oder mehrerer Verbindungen der Gruppe bestehend aus Isobornylacrylat, Isobornylmethacrylat, Cyclohexyl(meth)acrylat, 3,5,5-Trimethylcyclohexyl(meth)acrylat und 4-tert.-Butylcyclohexyl(meth)acrylat,
e) 25 - 45 Gew.-Teilen eines oder mehrerer Esters aus Acryl- oder Methacrylsäure und aliphatischen C₁ bis C₄ Monoalkoholen,
f) 0,5 - 2 Gew.-Teilen Acrylsäure, Methacrylsäure oder deren Mischungen und
g) 0-15 Gew.-Teilen einer oder mehrerer der Verbindungen der Gruppe bestehend aus Hydroxypropyl(meth)acrylat, Vinylester aliphatischer, gegebenenfalls verzweigter C₁ bis C₉ Monocarbonsäuren, Dialkyl- oder Di(cyclo)alkylester aus Malein- oder Fumarsäure und C₃ bis C₆ Monoalkoholen,
wobei die Summe der Gew.-Teile der Komponenten a) bis g) 100 beträgt.

3. Bindemittelzusammensetzungen gemäß Anspruch 1 oder 2, **dadurch gekennzeichnet, dass** die ε-Caprolacton-basierenden Polyole der Komponente B) eine mittlere OH-Funktionalität von 3-8, ein zahlenmittleres Molekulargewicht von 119 bis 1.500 g/mol und einen Hydroxylgehalt von 9,0 bis 36 Gew.-% haben.

4. Bindemittelzusammensetzungen gemäß einem der Ansprüche 1-3, **dadurch gekennzeichnet, dass** die ε-Caprolacton-basierenden Polyole der Komponente B) durch Umsetzung mit Diphenylcarbonat oder Dimethylcarbonat modifiziert sind.

5. Bindemittelzusammensetzungen gemäß einem der Ansprüche 1-4, **dadurch gekennzeichnet, dass** als Vernetzer der Komponente C) Urethan-, Uretdion-, Allophanat-, Biuret-, Iminooxadiazindion- und/oder Isocyanuratgruppen-aufweisende Polyisocyanate mit einem Gehalt an NCO-Gruppen von 5 bis 25 Gew.-%, einer mittleren NCO-Funktionalität von 2,0 bis 5,0 verwendet werden, wobei die NCO-Gruppen frei oder ganz oder teilweise blockiert vorliegen.

6. Bindemittelzusammensetzungen gemäß einem der Ansprüche 1-5, **dadurch gekennzeichnet, dass** die Mischung der Komponenten A) bis C) aus 40 bis 60 Gew.-Teilen A), 2 bis 20 Gew.-Teilen B) und 30 bis 50 Gew.-Teilen C) besteht, wobei sich die angegebenen Mengen zu 100 aufaddieren.

7. Verwendung der Bindemittelzüsammensetzungen gemäß einem der Ansprüche 1 - 6 zur Herstellung von Beschichtungen, Verklebungen oder Formteilen.

8. Beschichtungen erhältlich aus Bindemittelzusammensetzungen nach einem der Ansprüche 1-6.

9. Substrate beschichtet mit Beschichtungen gemäß Anspruch 8.
